# EUROPÄISCHE PATENTSCHRIFT

(11) **EP 2 122 136 B1**
(45) Veröffentlichungstag und Bekanntmachung des Hinweises auf die Patenterteilung: **15.09.2010**
(21) Anmeldenummer: 08716220.2
(22) Anmeldetag: 04.03.2008
(51) Int. Cl.: F01N 3/20

(54) **ABGASSTRANG FÜR EINEN VERBRENNUNGSMOTOR**
EXHAUST GAS SYSTEM FOR AN INTERNAL COMBUSTION ENGINE
LIGNE DE GAZ D'ÉCHAPPEMENT POUR UN MOTEUR À EXPLOSION

(30) Priorität: 21.03.2007 DE 102007013500
(43) Veröffentlichungstag der Anmeldung: 25.11.2009
(73) Patentinhaber: Bayerische Motoren Werke Aktiengesellschaft, 80809 München (DE)
(72) Erfinder: BOURDON, Klaus, 85276 Hettenshausen (DE); GRAF, Hubert, 81669 München (DE)
(74) Vertreter: Grüter, Klaus Peter
(86) Internationale Anmeldenummer: PCT/EP2008/001701
(87) Internationale Veröffentlichungsnummer: WO 2008/113471

(56) Entgegenhaltungen:
- EP-A- 1 217 196
- DE-A1-102004 027 593
- US-A1- 2003 115 860

## Beschreibung

Die Erfindung betrifft einen Abgasstrang für einen Verbrennungsmotor gemäß dem Oberbegriff des Anspruchs 1.

Aus der DE 10 2004 027593 A1, der US 2003/115860 A1 und der EP 1 217 196 A ist eine Abgasbehandlungsvorrichtung mit einem über Ventile gesteuerten Bypass bekannt.

Aufgabe der vorliegenden Erfindung ist es zu vermeiden, dass unbehandelte Abgase während des Abgas-Reinigungsbetriebs über die Bypass-Leitung in die Atmosphäre gelangen.

Diese Aufgabe wird durch einen Abgasstrang mit den Merkmalen des Anspruchs 1 gelöst. Vorteilhafte Ausgestaltungen der Erfindung sind Gegenstand der abhängigen Ansprüche.

Ausgehend von einem Abgasstrang eines Kraftfahrzeugs mit einer ersten Abgasleitung, die Abgase von der Brennkraftmaschine zu einer Abgasbehandlungsvorrichtung führt und einer zweiten Abgasleitung, die eine Bypass-Leitung bildet, die die Abgasbehandlungsvorrichtung überbrückt, wird erfindungsgemäß folgende Weiterbildung vorgeschlagen. In der Bypass-Leitung werden mindestens ein erstes Ventil und ein zweites Ventil hintereinander angeordnet. Zwischen dem ersten Ventil und dem zweiten Ventil ist eine Absaugleitung zur Reduzierung des Drucks zwischen dem ersten und dem zweiten Ventil vorgesehen. Der Druck vor dem zweiten Ventil und der Druck hinter dem zweiten Ventil oder der Umgebungsdruck des Kraftfahrzeugs wird bestimmt und die Absaugleitung wird derart mit einem Unterdruck beaufschlagt, dass ein Gasfluss über das zweite Ventil nach außen in die Umgebung des Kraftfahrzeugs verhindert ist.

Hierdurch kann sichergestellt werden, dass nur hinreichend behandeltes Abgas das Kraftfahrzeug verlässt. Dies wird insbesondere durch die zwei hintereinander angeordneten Ventile und der zwischen ihnen vorgesehenen Absaugung von Abgas erreicht, das unmittelbar vor dem zweiten Ventil steht.

Bei einer Ausgestaltung der Erfindung ist vorgesehen, dass der Unterdruck in der Absaugleitung bei einem Anstieg des Differenzdrucks zwischen dem Druck vor dem zweiten Ventil und dem Druck hinter dem zweiten Ventil bzw. dem Umgebungsdruck zunimmt. Es kann nicht immer sichergestellt werden, dass Ventile bzw. Abgasklappen im heißen Abgasstrom auch nach langer Zeit der Benutzung stets ausreichend und/oder in gleichem Maße schließen. Diesen negativen Randbedingungen wird erfindungsgemäß höchst wirkungsvoll durch eine Anpassung des Unterdrucks bzw. des Maßes der Absaugung durch die Absaugleitung begegnet.

Bei einer Ausführungsform der Erfindung ist vorgesehen, dass der Schließdruck mindestens des zweiten Ventils bei einem Anstieg des Differenzdrucks zwischen dem Druck vor dem zweiten Ventil und dem Druck hinter dem zweiten Ventil bzw. dem Umgebungsdruck zunimmt. Auch durch diese ergänzende oder alternative Maßnahme kann ein Austreten nicht ausreichend behandelten Abgases verhindert werden.

Bei einer Ausgestaltung der Erfindung ist vorgesehen, dass bei Unterschreiten eines vorbestimmten Differenzdrucks zwischen dem Druck vor dem zweiten Ventil und dem Druck hinter dem zweiten Ventil bzw. dem Umgebungsdruck eine Fehlermeldung generiert und für Diagnosezwecke gespeichert wird. Auf diesen Fehler kann der Fahrer optisch oder akustisch hingewiesen werden, um kurzfristig eine Reparatur vornehmen zu lassen. Zudem erhält die Werkstatt durch die gespeicherte Fehlermeldung, z.B. im Rahmen einer Fehlerdiagnose bei einem regulären Fahrzeug-Service, einen Hinweis auf das Vorhandensein des Fehlers, sofern dieser noch nicht behoben und der entsprechende Fehlerspeichereintrag noch nicht gelöscht worden ist.

Bei einer Ausführungsform der Erfindung ist vorgesehen, dass bei einem Anstieg des Differenzdrucks zwischen dem Druck vor dem zweiten Ventil und dem Druck hinter dem zweiten Ventil bzw. dem Umgebungsdruck das erste Ventil in Richtung der Öffnungsstellung gebracht und damit der Gasstrom durch die Absaugleitung erhöht und vorzugsweise auch der Differenzdruck reduziert oder weitgehend konstant gehalten wird. Dies ist eine weitere Maßnahme mit der alternativ oder ergänzend sichergestellt werden kann, dass nur hinreichend behandeltes Abgas austritt.

Bei einer weiteren Ausführungsform der Erfindung ist vorgesehen, dass das erste Ventil und das zweite Ventil bei einer Überbrückung der Abgasbehandlungsvorrichtung in weitgehend paralleler Weise betätigt werden. Hierdurch kann der mechanische oder sonstige Aufwand zur Herbeiführung eines möglichst dichten Verschließens der Ventile bzw. der Absperrklappen verringert werden, z.B. durch ein beide Ventile zur Betätigung verbindendes Gestänge.

Bei einer Ausgestaltung der Erfindung ist vorgesehen, dass die Absaugleitung mit dem Verbrennungsmotor verbunden ist und der Einlass des Verbrennungsmotors oder eine von dem Verbrennungsmotor betriebene Unterdruckpumpe Unterdruck in der Absaugleitung erzeugt. Hierdurch kann der erfindungsgemäß benötigte Unterdruck zwischen den zwei Ventilen mit geringem Aufwand geschaffen werden.

Bei einer bevorzugten Ausführungsform der Erfindung ist vorgesehen, dass die Abgasbehandlungsvorrichtung ein Stickoxidspeicherkatalysator ist. Dieser Katalysator ermöglicht eine hinreichende Abgasbehandlung der Abgase eines OttoMotors im Magerbetrieb, wenn die Abgasbehandlung durch den üblichen Drei-Wege-Katalysator nicht ausreicht.

Bei einer weiteren bevorzugten Ausführungsform der Erfindung ist vorgesehen, dass das erste Ventil und das zweite Ventil geschlossen sind, so dass die Abgase weitgehend über die Abgasbehandlungsvorrichtung nach außen geführt werden und ein geringerer Teil der Abgase über die Absaugleitung in den Verbrennungsmotor zurückgeführt wird, wenn der Verbrennungsmotor im Magerbetrieb betrieben wird.

Bei einer Ausgestaltung der Erfindung ist vorgesehen, dass das erste Ventil und das zweite Ventil geöffnet sind und ein drittes vor der Abgasbehandlungsvorrichtung vorgesehenes Ventil geschlossen ist, wenn der Verbrennungsmotor außerhalb des Magerbetriebs betrieben wird. Die Abgase werden dann über die Bypass-Leitung nach außen geführt. Bevorzugt ist hinter der Abgasbehandlungsvorrichtung ein weiteres Ventil vorgesehen, um ein schädliches Eindringen von Abgasen in die Abgasbehandlungsvorrichtung über den Ausgang der Abgasbehandlungsvorrichtung zu verhindern.

Bei einer Ausführungsform der Erfindung ist vorgesehen, dass ein viertes Ventil in der Absaugleitung vorgesehen und der Unterdruck in der Absaugleitung über die Stellung des vierten Ventils vorgegeben wird.

Ein Ausführungsbeispiel der Erfindung wird anhand einer Zeichnung näher erläutert. Es zeigt:

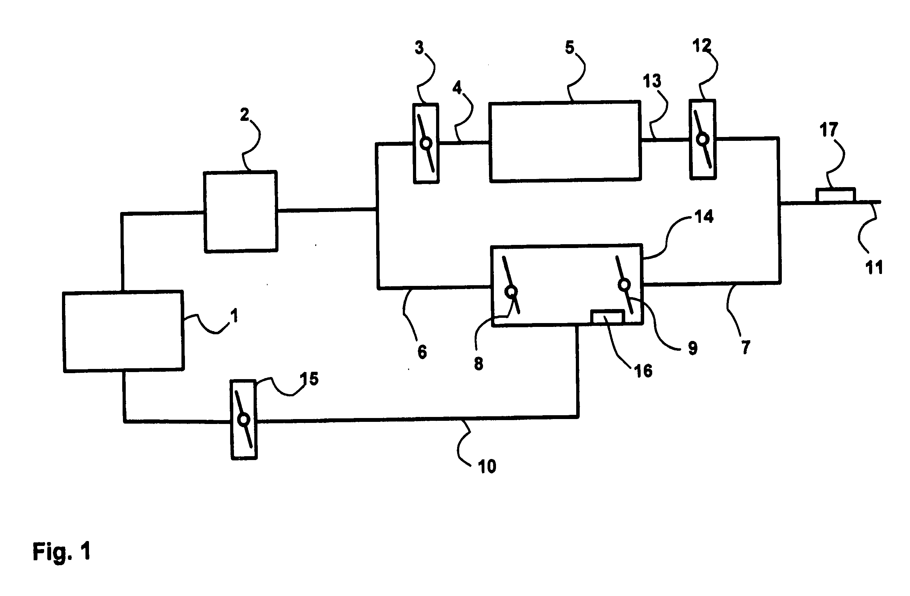

- Figur 1:: einen erfindungsgemäßen Abgasstrang an einem Otto- Verbrennungsmotor.

Der in Figur 1 schematisch dargestellte erfindungsgemäße Abgasstrang wird an einem Ottomotor 1 betrieben. Der Abgasstrang weist einen Drei-Wege-Katalysator 2, ein Ventil 3, den ersten Teil einer ersten Abgasleitung 4, eine Abgasbehandlungsvorrichtung 5, den zweiten Teil einer zweiten Abgasleitung 13, ein Ventil 12, den ersten Teil einer zweiten Abgasleitung 6, eine Absperrvorrichtung 14, den zweiten Teil der zweiten Abgasleitung 7, eine Absaugleitung 10 und ein Ventil 12 auf. Die Abgase verlassen das Fahrzeug (nicht dargestellt) über das Ventil 12 und passieren dabei einen Drucksensor 17, der die Höhe des Luftdrucks misst. Die Absperrvorrichtung 14 weist zwei hintereinander angeordnete Ventile 8 und 9 auf. Zwischen den Ventilen 8 und 9 ist die Absaugleitung 10 und ein erster Drucksensor 16 an der Absperrvorrichtung 14 vorgesehen. Die Abgasbehandlungsvorrichtung 5 ist bei diesem Ausführungsbeispiel ein Stickoxidspeicherkatalysator.

Während des Magerbetriebs des Ottomotors 1, d.h. bei geringer Motorlast, ist das Ventil 3 geöffnet, so dass die aus dem Ottomotor 1 austretenden Abgase der Abgasbehandlungsvorrichtung 5 zugeführt werden. Das Ventil 12 ist geöffnet, so dass die aus der Abgasbehandlungsvorrichtung 5 austretenden Abgase das Fahrzeug verlassen.

Der aus dem ersten Teil 6 der zweiten Abgasleitung, der Absperrvorrichtung 14, und dem zweiten Teil 7 der zweiten Abgasleitung gebildete Bypass für die Abgasbehandlungsvorrichtung 5 ist geschlossen, d.h. die beiden Ventile 8 und 9 befinden sich in ihrer geschlossenen Stellung. Eventuell in den Raum zwischen den Ventilen über ein nicht hinreichend geschlossenes Ventil 8 eintretendes Abgas wird über die Abgasleitung 10 und ein geöffnetes Ventil 15 vom Ottomotor abgesaugt und erneut dem Verbrennungsprozess des Motors 1 zugeführt.

Mittels der Drucksensoren 16 und 17 wird der Differenzdruck zwischen dem Innenraum der Absperrvorrichtung 14, d.h. vor dem Ventil 9, und dem außerhalb des Fahrzeugs herrschenden Luftdruck bestimmt. Eine im Fahrzeug vorgesehene elektrische Regelung (nicht dargestellt), insbesondere ein entsprechendes Steuergerät, ist mit den beiden Drucksensoren 16 und 17 elektrisch verbunden und bestimmt den Differenzdruck. Nähert sich der Druck am Drucksensor 16 dem Luftdruck über einen vorbestimmten Druckunterschied hinaus an, steuert die elektrische Regelung das Ventil 15 derart an, dass sich die vom Motor 1 abgesaugte Gasmenge erhöht und sich der vorbestimmte Druckunterschied wieder einstellt. Aufgrund des Differenzdrucks bzw. Unterdrucks in der Absperrvorrichtung 14 ist verhindert, dass Abgas das Ventil 9 passiert und aus dem Fahrzeug austritt. Dies gilt auch dann, wenn das Ventil 14 nicht hundertprozentig schließt. Unterschreitet der Druckunterschied einen vorgegebenen Schwellenwert, d.h. es besteht die Gefahr, dass Abgas das Ventil 9 passiert, weil kein Unterdruck mehr besteht, wird dies von der elektrischen Regelung erkannt, eine Fehlermeldung für den Fahrer generiert und die Fehlermeldung für spätere Diagnosezwecke zum Hinweis auf die Notwendigkeit eines Austauschs der Absperrvorrichtung 14 gespeichert.

Während des Normalbetriebs des Motors 1, insbesondere bei normaler bis hoher Motorlast, filtert der Drei-Wege-Katalysator 2 die Abgase in hinreichendem Maße.

Um eine Schädigung des Stickoxidspeicherkatalysators 5 durch in ihn eintretendes sehr heißes Abgas, insbesondere im Volllastbetrieb des Motors 1, zu verhindern, werden die Ventile 3 und 12 außerhalb des Magerbetriebs des Motors geschlossen. Die Ventile 8 und 9 werden vollständig geöffnet und das Abgas passiert ausschließlich den Bypass, der an dem Stickoxidspeicherkatalysator 5 vorbei ins Freie führt. Damit kann kein Abgas in den Stickoxidspeicherkatalysator 5 gelangen.

### Bezugszeichenliste:

- 1: Ottomotor
- 2: Drei-Wege-Katalysator
- 3: Ventil
- 4: erster Teil einer ersten Abgasleitung
- 5: Abgasbehandlungsvorrichtung
- 6: erster Teil der zweiten Abgasleitung
- 7: zweiter Teil der zweiten Abgasleitung
- 8: Ventil
- 9: Ventil
- 10: Absaugleitung
- 11: Umgebungsdruck
- 12: Ventil
- 13: zweiter Teil der ersten Abgasleitung
- 14: Absperrvorrichtung
- 15: Ventil
- 16: erster Drucksensor
- 17: zweiter Drucksensor

## Patentansprüche

1. Abgasstrang für einen Verbrennungsmotor (1) eines Kraftfahrzeugs mit einer ersten Abgasleitung (4), die Abgase von der Brennkraftmaschine zu einer Abgasbehandlungsvorrichtung (5) führt und einer zweiten Abgasleitung (6, 7), die eine Bypass-Leitung bildet, die die Abgasbehandlungsvorrichtung (5) überbrückt, **dadurch gekennzeichnet, dass**
- in der Bypass-Leitung (6, 7) mindestens ein erstes Ventil (8) und ein zweites Ventil (9) hintereinander angeordnet sind,
- zwischen dem ersten Ventil (8) und dem zweiten Ventil (9) eine Absaugleitung (10) zur Reduzierung des Drucks zwischen dem ersten und dem zweiten Ventil (8, 9) vorgesehen ist, und
- der Druck vor dem zweiten Ventil (9) und der Druck hinter dem zweiten Ventil (9) oder der Umgebungsdruck (11) des Kraftfahrzeugs bestimmt wird und die Absaugleitung (10) derart mit einem Unterdruck beaufschlagt wird, dass ein Abgasfluss über das zweite Ventil (9) nach außen in die Umgebung des Kraftfahrzeugs verhindert ist.

2. Abgasstrang nach Anspruch 1, **dadurch gekennzeichnet, dass** der Unterdruck in der Absaugleitung (10) bei einem Anstieg des Differenzdrucks zwischen dem Druck vor dem zweiten Ventil (9) und dem Druck hinter dem zweiten Ventil (9) bzw. dem Umgebungsdruck zunimmt.

3. Abgasstrang nach Anspruch 1 oder 2, **dadurch gekennzeichnet, dass** der Schließdruck mindestens des zweiten Ventils (9) bei einem Anstieg des Differenzdrucks zwischen dem Druck vor dem zweiten Ventil und dem Druck hinter dem zweiten Ventil bzw. dem Umgebungsdruck zunimmt.

4. Abgasstrang nach einem der vorstehenden Ansprüche, **dadurch gekennzeichnet, dass** bei Unterschreiten eines vorbestimmten Differenzdrucks zwischen dem Druck vor dem zweiten Ventil und dem Druck hinter dem zweiten Ventil bzw. dem Umgebungsdruck eine Fehlermeldung generiert und für Diagnosezwecke gespeichert wird.

5. Abgasstrang nach einem der vorstehenden Ansprüche, **dadurch gekennzeichnet, dass** bei einem Anstieg des Differenzdrucks zwischen dem Druck vor dem zweiten Ventil (9) und dem Druck hinter dem zweiten Ventil (9) bzw. dem Umgebungsdruck das erste Ventil (8) in Richtung der Öffnungsstellung gebracht und damit der Gasstrom durch die Absaugleitung (10) erhöht und vorzugsweise auch der Differenzdruck reduziert oder weitgehend konstant gehalten wird.

6. Abgasstrang nach einem der vorstehenden Ansprüche, **dadurch gekennzeichnet, dass** das erste Ventil (8) und das zweite Ventil (9) bei einer Überbrückung der Abgasbehandlungsvorrichtung (5) in weitgehend paralleler Weise betätigt werden.

7. Abgasstrang nach einem der vorstehenden Ansprüche, **dadurch gekennzeichnet, dass** die Absaugleitung (10) mit dem Verbrennungsmotor (1) verbunden ist und der Einlass des Verbrennungsmotors oder eine von dem Verbrennungsmotor betriebene Unterdruckpumpe Unterdruck in der Absaugleitung (10) erzeugt.

8. Abgasstrang nach einem der vorstehenden Ansprüche, **dadurch gekennzeichnet, dass** die Abgasbehandlungsvorrichtung (5) ein Stickoxidspeicherkatalysator ist.

9. Abgasstrang nach einem der vorstehenden Ansprüche, **dadurch gekennzeichnet, dass** das erste Ventil (8) und das zweite Ventil (9) geschlossen sind, so dass die Abgase weitgehend über die Abgasbehandlungsvorrichtung (5) nach außen geführt werden und ein geringerer Teil der Abgase über die Absaugleitung (10) in den Verbrennungsmotor zurückgeführt wird, wenn der Verbrennungsmotor im Magerbetrieb betrieben wird.

10. Abgasstrang nach einem der vorstehenden Ansprüche, **dadurch gekennzeichnet, dass** das erste Ventil (8) und das zweite Ventil (9) geöffnet sind und ein drittes vor der Abgasbehandlungsvorrichtung vorgesehenes Ventil (3) geschlossen ist, wenn der Verbrennungsmotor außerhalb des Magerbetriebs betrieben wird, so dass die Abgase dann über die Bypass-Leitung (6, 7, 8, 9) nach außen geführt werden.

11. Abgasstrang nach Anspruch 10, **dadurch gekennzeichnet, dass** ein viertes Ventil (12) in der Absaugleitung (10) vorgesehen und der Unterdruck in der Absaugleitung über die Stellung des vierten Ventils vorgegeben wird.

## Claims

1. An exhaust tract for an internal combustion engine (1) of a motor vehicle with a first exhaust gas line (4), which guides exhaust gases from the internal combustion engine to an exhaust gas treatment device (5), and a second exhaust gas line (6, 7), which forms a bypass line which bypasses the exhaust gas treatment device (5), **characterised in that**
- at least a first valve (8) and a second valve (9) are arranged one behind the other in the bypass line (6, 7),
- an exhaust line (10) is provided between the first valve (8) and the second valve (9) to reduce the pressure between the first and second valve (8, 9), and
- the pressure upstream of the second valve (9) and the pressure downstream of the second valve (9) or the ambient pressure (11) of the motor vehicle are determined and a negative pressure is applied to the exhaust gas line (10) such that an exhaust gas flow via the second valve (9) to the outside into the environment of the motor vehicle is prevented.

2. An exhaust tract according to claim 1, **characterised in that** the negative pressure in the exhaust line (10) increases in the event of a rise in the differential pressure between the pressure upstream of the second valve (9) and the pressure downstream of the second valve (9) or the ambient pressure.

3. An exhaust tract according to claim 1 or 2, **characterised in that** the closing pressure at least of the second valve (9) increases in the event of a rise in the differential pressure between the pressure upstream of the second valve and the pressure downstream of the second valve or the ambient pressure.

4. An exhaust tract according to any one of the preceding claims, **characterised in that** when the differential pressure between the pressure upstream of the second valve and the pressure downstream of the second valve or the ambient pressure falls below a predetermined differential pressure, a fault message is generated and stored for diagnostic purposes.

5. An exhaust tract according to any one of the preceding claims, **characterised in that** in the event of a rise in the differential pressure between the pressure upstream of the second valve (9) and the pressure downstream of the second valve (9) or the ambient pressure, the first valve (8) is moved in the direction of the open position and therefore the gas flow through the exhaust line (10) is increased and the differential pressure is preferably also reduced or substantially kept constant.

6. An exhaust tract according to any one of the preceding claims, **characterised in that** the first valve (8) and the second valve (9) are actuated in a substantially parallel manner upon a bypassing of the exhaust gas treatment device (5).

7. An exhaust tract according to any one of the preceding claims, **characterised in that** the exhaust line (10) is connected to the internal combustion engine (1) and the intake of the internal combustion engine or a negative pressure pump operated by the internal combustion engine produces negative pressure in the exhaust line (10).

8. An exhaust tract according to any one of the preceding claims, **characterised in that** the exhaust gas treatment device (5) is a nitrogen oxide storage catalytic converter.

9. An exhaust tract according to any one of the preceding claims, **characterised in that** the first valve (8) and the second valve (9) are closed so the exhaust gases are substantially guided to the outside via the exhaust gas treatment device (5) and a smaller portion of the exhaust gases is returned via the exhaust line (10) into the internal combustion engine when the internal combustion engine is operated in a lean operating mode.

10. An exhaust tract according to any one of the preceding claims, **characterised in that** the first valve (8) and the second valve (9) are open and a third valve (3) provided upstream of the exhaust gas treatment device is closed when the internal combustion engine is operated outside the lean operating mode, so the exhaust gases are then guided to the outside via the bypass line (6, 7, 8, 9).

11. An exhaust tract according to claim 10, **characterised in that** a fourth valve (12) is provided in the exhaust line (10) and the negative pressure in the exhaust line is predetermined by means of the position of the fourth valve.

## Revendications

1. Ligne de gaz d'échappement d'un moteur à combustion (1) d'un véhicule automobile comportant une première conduite de gaz d'échappement (4) pour les gaz d'échappement entre le moteur à combustion et un dispositif de traitement des gaz d'échappement (5) ainsi qu'une seconde conduite de gaz d'échappement (6, 7) constituant une conduite de dérivation contournant le dispositif de traitement des gaz d'échappement (5),
ligne **caractérisée en ce que**
la conduite de dérivation (6, 7) comporte au moins une première vanne (8) et une seconde vanne (9) l'une derrière l'autre,
- entre la première vanne (8) et la seconde vanne (9), une conduite d'aspiration (10) réduit la pression entre la première et la seconde vanne (8, 9), et
- on détermine la pression en amont de la seconde vanne (9) et la pression en aval de la seconde vanne (9) ou la pression ambiante (11) du véhicule automobile et on applique à la conduite d'aspiration (10), une dépression qui évite que les gaz d'échappement ne s'échappent à l'environnement du véhicule automobile à travers la seconde vanne (9).

2. Ligne de gaz d'échappement selon la revendication 1,
**caractérisée en ce que**
la dépression dans la conduite d'aspiration (10) augmente en fonction de l'augmentation de la différence de pression entre la pression en amont de l'autre vanne (9) et la pression en aval de la seconde vanne (9) ou la pression ambiante.

3. Ligne de gaz d'échappement selon la revendication 1 ou 2,
**caractérisée en ce que**
la pression de fermeture d'au moins la seconde vanne (9), augmente lors d'une augmentation de la différence de pression entre la pression en amont de la seconde vanne et la pression en aval de la seconde vanne ou la pression ambiante.

4. Ligne de gaz d'échappement selon l'une des revendications précédentes,
**caractérisée en ce qu'**
en cas de dépassement vers le bas d'une différence de pression prédéterminée entre la pression en amont de la seconde vanne et la pression en aval de la seconde vanne ou la pression ambiante, on génère un message de défaut et on l'enregistre à des fins de diagnostic.

5. Ligne de gaz d'échappement selon l'une des revendications précédentes,
**caractérisée en ce qu'**
en cas d'augmentation de la différence de pression entre la pression en amont de la seconde vanne (9) et de la pression en aval de la seconde vanne (9) ou de la pression ambiante, on fait passer la première vanne (8) dans le sens de la position d'ouverture et ainsi on augmente la veine des gaz à travers la conduite d'aspiration (10) et de préférence on réduit également la différence de pression ou on la maintient pratiquement constante.

6. Ligne de gaz d'échappement selon l'une des revendications précédentes,
**caractérisée en ce que**
le contournement du dispositif de traitement des gaz d'échappement (5) se fait en actionnant la première vanne (8) et la seconde vanne (9) pratiquement en parallèle.

7. Ligne de gaz d'échappement selon l'une des revendications précédentes,
**caractérisée en ce que**
la conduite d'aspiration (10) est reliée au moteur à combustion (1) et l'entrée du moteur à combustion ou une pompe à dépression entraînée par le moteur à combustion, génère une dépression dans la conduite d'aspiration (10).

8. Ligne de gaz d'échappement selon l'une des revendications précédentes,
**caractérisée en ce que**
le dispositif de traitement des gaz d'échappement (5) est un catalyseur accumulateur d'oxydes d'azote.

9. Ligne de gaz d'échappement selon l'une des revendications précédentes,
**caractérisée en ce que**
la première vanne (8) et la seconde vanne (9) sont fermées pour que les gaz d'échappement soient principalement évacués vers l'extérieur à travers le dispositif de traitement des gaz d'échappement (5), et qu'une fraction plus faible des gaz d'échappement revienne dans le moteur à combustion à travers la conduite d'aspiration (10) lorsque le moteur à combustion fonctionne en mode maigre.

10. Ligne de gaz d'échappement selon l'une des revendications précédentes,
**caractérisée en ce que**
la première vanne (8) et la seconde vanne (9) sont ouvertes et une troisième vanne (3) prévue en amont du dispositif de traitement des gaz d'échappement est fermée si le moteur à combustion interne fonctionne en dehors du mode maigre pour que les gaz d'échappement soient alors évacués à l'extérieur par la conduite de dérivation (6, 7, 8, 9).

11. Ligne de gaz d'échappement selon la revendication 10,
**caractérisée en ce qu'**
une quatrième vanne (12) est prévue dans la conduite d'aspiration (10) et la dépression dans la conduite d'aspiration est prédéfinie par la position de cette quatrième vanne.
